# EUROPEAN PATENT APPLICATION

(11) **EP 1 495 933 A2**
(43) Date of publication of application: **12.01.2005**
(21) Application number: 04253749.8
(22) Date of filing: 23.06.2004
(51) Int. Cl.: B60T 13/22, B60T 13/14, B60T 13/68

(54) **Method and apparatus for a vehicle breaking system**

(30) Priority: 07.07.2003 US 485199 P; 14.06.2004 US 866919 P
(71) Applicant: Spicer Off-Highway Belgium N.V., B-8200 Brugge (BE)
(72) Inventor: Versteyhe, Mark R.J., Oostkamp 8020 (BE)
(74) Representative: Cheyne, John Robert Alexander M.

(57) **Abstract**

A method and apparatus for safely braking a vehicle using a brake system under control of a controller (12). The system includes a parallel system of an electronic brake system for applying the brake and a mechanical brake system for controlling the brake. The mechanical system includes at least one restrictor (70) connected to at least one spring-applied, hydraulically-released parking brake (68). The restrictor (70) reduces the flow of brake fluid from the parking brake (68) so that the parking brake (68) is gradually applied to one or more wheels.

## Description

### FIELD OF THE INVENTION

The present invention relates to a system for safely braking when using brake-by-wire systems.

### BACKGROUND OF THE INVENTION

Brake-by-wire systems are well known for service brakes, however, back-up systems are required to provide braking if electrical or mechanical power cannot be supplied to the brake-by-wire system. Some back-up systems require a complex electronic controller that must be programmed for various contingencies and provided with back-up power. Often, this programming is difficult, time-consuming and expensive. Other back-up mechanical or electromechanical systems do not provide the reliability and/or inexpensive construction required for modem vehicles.

Further, the prior art back-up mechanical or electromechanical systems fail to gradually, but effectively, apply the brakes during a power failure. Instead, the systems often apply the brakes of the vehicle rapidly. A rapid application of the brakes could cause the vehicle to lose control and/or lose some portion of the load it is carrying.

Known back-up systems include, by way of example only, that shown in U.S. Patent No. 5,704,693, which provides for a hydraulic and electric powered parking brake system. A hydraulic and an electric signal are provided simultaneously and independently to a parking actuator assembly. The assembly has an electric motor pump communicating with a reservoir and an outlet line which includes a check valve. The outlet line connects the assembly with mechanical brake apply means. In this case, the means are standard spring-apply, hydraulic-release actuators. When the operator engages the system, an electrical signal is sent to a solenoid to open, thus venting the stored hydraulic pressure into a chamber and allowing the springs of the braking means to move the brakes into the wheels. Redundantly, the operator's action causes a cam member to displace a plunger against a caged spring mechanism which displaces a piston. The displacement of the piston opens a control valve, thereby venting the fluid pressure which causes the springs to overcome the pressure and the parking brake to engage the wheels. Thus, the piston and the solenoid can be operated independently or simultaneously to effect the release of hydraulic pressure from the brakes.

U.S. Patent No. 6,354,672 teaches a first hydraulic pressure source which includes a first pump used to pressurize hydraulic fluid. The '672 patent also teaches a second hydraulic pressure source to pressurize the hydraulic fluid. A brake-cylinder-pressure control device operates to control the fluid pressurized by the first pressure source when the brake cylinder of the system is connected to the first hydraulic pressure source.

The'672 patent also teaches an emergency communication device used when the brake-cylinder-pressure control device and the first pump device fail to normally function. The emergency device holds the brake cylinder in communication with the second hydraulic pressure source. A separate energy storage portion, having at least one accumulator, is included to operate a booster and a pressure-increasing device in case the above described system fails. The accumulator is said to have a large enough capacity to operate the booster a relatively large number of times, allowing the operator to direct the vehicle to a suitable place to repair the device.

U.S. Patent No. 5,302,008 provides for a brake-by-wire system with an auxiliary mechanical brake system capable of immediately actuating if the brake-by-wire system fails. The patent teaches a brake pedal and a brake pedal status sensor connected to the pedal. An electric controller receives a signal from the sensor and controls a brake actuating means. The actuating means generates a brake fluid pressure based upon the signal from the sensor. The controller signals a solenoid valve which transmits the brake fluid pressure to the brakes. If the brake actuating means cannot communicate with the brakes, a separate brake fluid pressure, generated upon the actuation the brake pedal connected to a master cylinder, is provided to the brakes.

In light of the state of the art discussed above, it would be advantageous for a brake-by-wire system to safely and gradually apply at least one parking brake to stop or slow a vehicle without requiring complex hardware or software for the controller.

### SUMMARY OF THE INVENTION

The invention relates to an apparatus for and a method of using a vehicle braking system. The invention comprises at least one spring apply, hydraulic release parking brake and at least one parking brake valve connected to the parking brake through at least one fluid line. A restrictor is in fluid communication with the parking valve and the brake. Under certain conditions, brake fluid is allowed to flow from the parking brake and through the valve and restrictor. The restrictor restricts the flow of brake fluid from the parking brake so that the brake is gradually applied.

### BRIEF DESCRIPTION OF THE DRAWINGS

The above, as well as other advantages of the present invention, will become readily apparent to those skilled in the art from the following detailed description when considered in the light of the accompanying drawings in which:
Fig. 1 is a schematic view of an embodiment of the present invention; and
Fig. 2 is a schematic view of a component of the invention depicted in Fig. 1.

### DETAILED DESCRIPTION OF THE PREFERRED EMBODIMENTS

It is to be understood that the invention may assume various alternative orientations and step sequences, except where expressly specified to the contrary. It is also to be understood that the specific devices and processes illustrated in the attached drawings, and described in the following specification are simply exemplary embodiments of the inventive concepts of the present invention. Hence, specific dimensions, directions or other physical characteristics relating to the embodiments disclosed are not to be considered as limiting, unless expressly stated otherwise.

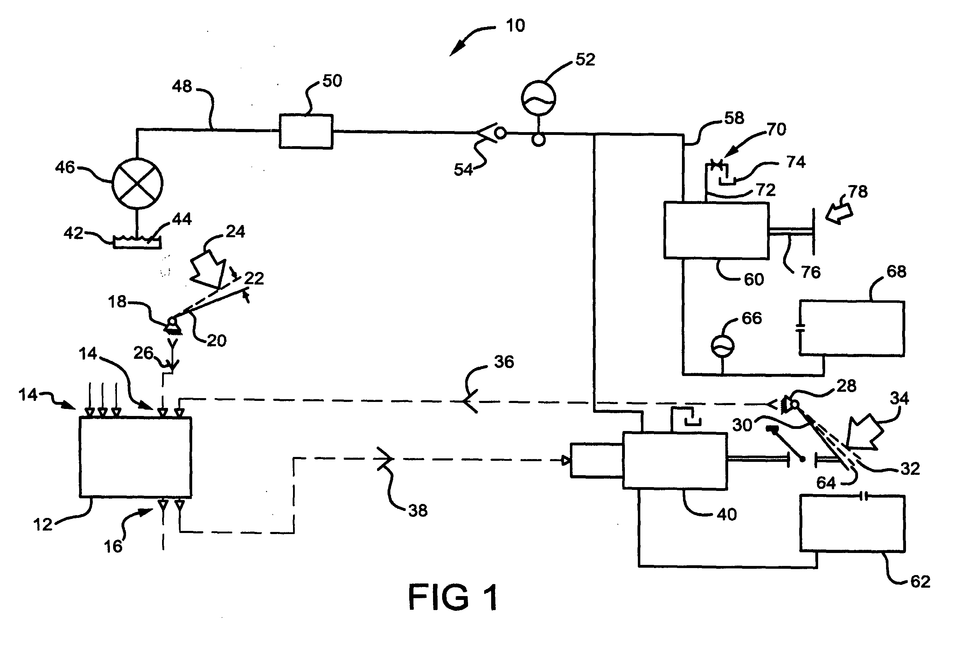

A vehicle braking system 10 of the present invention is schematically depicted in Fig. 1. An electronic vehicle controller 12 is provided having at least one input connector 14 and at least one output connector 16. Preferably, the controller 12 has a plurality of input connectors 14 and a plurality of output connectors 16. The input connectors 14 receive electronic and/or fluid pressure signals from, among other components, at least one sensor 18 connected to a vehicle accelerator pedal 20. The sensor 18 determines a deflection 22 of the pedal 20 caused by a force 24 on the pedal 20 and provides a signal 26 to the controller 12 regarding the deflection 22.

The controller 12 also has an input connector 14 for an electronic and/or fluid pressure signal from a sensor 28 connected to a vehicle brake pedal 30. The sensor 28 senses a deflection of the pedal 30 into a first deflection zone 32 caused by a force 34 on the pedal 30 and provides a signal 36 to the controller 12 regarding the deflection.

The controller 12 uses the signal 36 from the vehicle brake pedal sensor 28 and the signal 26 from the accelerator sensor 18 to generate at least one signal 38 to at least one service brake valve 40. Typically, the signal 38 leaves the controller 12 through one of the output connectors 16. By way of example only, the controller 12 can also provide one or more signals to other braking devices and/or the engine (not shown). The signal(s) can be communicated to the service brake valve 40 and/or anywhere else electronically and/or through fluid pressure means.

The service brake valve 40 is in fluid communication with a supply reservoir 42 of brake fluid 44. A pump 46 draws the brake fluid from the supply reservoir 42 and pressurizes it within a brake line 48. A brake fluid pressure regulator 50 is located within the brake line 48 for electronically and/or mechanically regulating the brake fluid pressure as needed.

A first accumulator 52 is in fluid communication with the brake line 48 to receive and store brake fluid under pressure. A one-way valve 54, upstream from the first accumulator 52, prevents brake fluid from returning to the fluid supply 42 and maintains fluid pressure downstream of the valve 54 when the engine is off. The first accumulator 52 maintains a sufficient volume and pressure of brake fluid to allow at least one and preferably two or three service brake applications before it is exhausted.

The first accumulator 52 is in fluid communication with at least a service brake line 56 and also to a parking brake line 58. The service brake line 56 is in fluid communication with the service brake valve 40. The parking brake line 58 is in fluid communication with at least one parking brake valve 60.

The service brake valve 40 is in fluid communication with at least one service brake 62. The service brake 62 may be a drum or a disc type brake as known to those skilled in the art. According to the preferred embodiment, the service brake 62 is a spring-apply, hydraulic release brake, as known to those skilled in the art.

In addition to the above-described connection between the brake pedal 30 and the service brake valve 40, the brake pedal 30 is also mechanically connected to the service brake valve 40. The brake pedal 30 engages the service brake valve 40 when the pedal 30 is located in a second deflection zone 64. The second deflection zone 64 is located beyond the first pedal deflection zone 32.

A second accumulator 66 is in fluid communication with the parking brake valve 60. The second accumulator 66 stores a quantity of pressurized brake fluid 44. The quantity of pressurized brake fluid is small in comparison to the pressurized brake fluid stored in the first accumulator 52. A parking brake 68 is located in fluid communication with the second accumulator 66. Preferably, the parking brake 68 is a spring-apply, hydraulic-release brake, as known to those skilled in the art.

At least one restrictor 70 is in fluid communication with the parking brake valve 60 through at least one fluid line 72. Fig. 1 depicts only one restrictor 70, however, it can be appreciated that any number of restrictors can be located anywhere in line 72 in communication with the parking brake 68. The fluid line 72 also connects the restrictor 70 to a sump 74.

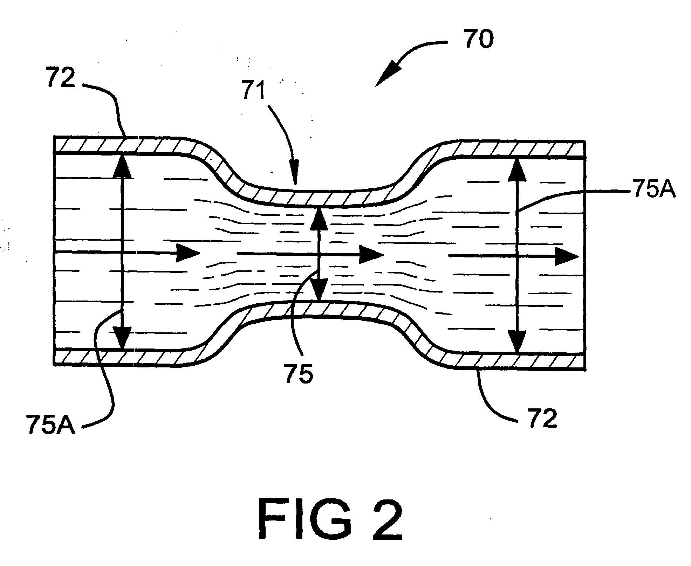

As shown in Fig. 2, the restrictor 70 is preferably a restriction 71 in the fluid line 72. The restriction 71 can be a necked down portion of the fluid line 72 or it can be a separate component that is connected to the fluid line 72. If the restriction 71 is a separate component, the fluid line 72 may be connected to the restriction 71 by mechanical means, friction means, adhesive means and/or welding means. Regardless of the type of restrictor used, the restrictor 70 provides a smaller cross-sectional area 75, for the brake fluid to flow through as compared to the cross-sectional area 75A of line 72. The decrease in cross-sectional area the brake fluid can flow through results in less brake fluid moving through the line 72 for any particular unit of time.

Those skilled in the art will appreciate that the restrictor 70 can be located anywhere in line 72. Those skilled in the art will also appreciate that the restrictor 70 can restrict fluid line 72 in a manner other than the symmetrical manner depicted in Fig. 2. By way of example only, the restrictor 70 can be any non-symmetrical restriction for a fluid line having any shape including, but not limited to, round or elliptical. It can also be appreciated that the size and the length of the restriction 71 can be varied to increase or decrease the quantity of brake fluid passing therethrough for any particular unit of time.

A preferred method of using the present invention will now be described. When electrical or mechanical power is supplied to the brake fluid pump 46, it delivers pressurized brake fluid to the service brake valve 40 and the parking brake valve 60. The brake fluid flows through the parking brake valve 60 and into the parking brake 68. The pressurized brake fluid urges one or more friction means (not shown) associated with the parking brake 68 from engagement with one or more friction means associated with the wheel (not shown), thereby allowing the wheel to rotate as known by those skilled in the art. The pressurized brake fluid also flows into the accumulator 66.

A vehicle operator may manually or automatically engage the parking brake valve 60 to engage the parking brake 68 under normal operating conditions. For example, the vehicle operator may engage switch 76 with force 78 on valve 60. The parking brake valve 60 disconnects the parking brake 68 from the parking brake line 58 and connects the parking brake 68 to fluid line 72. Pressurized brake fluid flows from the parking brake 68, through the parking brake valve 60, through line 72 and through restrictor 70. The restrictor 70 restricts the flow of the pressurized brake fluid from the parking brake 68. By restricting the flow of the pressurized brake fluid from the parking brake 68, the one or more friction means within the parking brake 68, previously held off the wheel friction means by the pressurized fluid, are allowed to gradually frictionally engage one another. The gradual frictional engagement of the parking brake friction means with the wheel friction means gradually slows the rotation of the wheel.

Engagement of the service brake 62 will now be described. Locating the brake pedal 30 into the first deflection zone 32 results in the brake pedal sensor 28 measuring the deflection and providing the controller 12 with a deflection signal 36. The controller 12 processes the deflection signal 36, along with any signal 26 from the accelerator sensor 18. An electronic and/or fluid pressure signal 38, proportional to at least the deflection signal 36, is sent to the service brake valve 40. The service brake valve 40 engages the spring-apply, hydraulic-release service brake 62 to slow or stop the vehicle based upon the signal 38, as known to those skilled in the art.

If a brake system failure occurs, wherein the controller 12, the pump 46 and/or the engine fails, the brake pedal 30 may be deflected beyond the first deflection zone 32 into a second deflection zone 64. During any brake system failure, the controller 12 need only be programmed to end its control of the brake system 10 upon sensing the failure. This eliminates the requirement for a controller needing complex hardware or software to control braking during a system failure.

In the second deflection zone 64, the brake pedal 30 mechanically engages the service brake valve 40. The degree to which the brake pedal 30 is located within the second deflection zone 64 is proportional to the amount of braking desired to slow or stop the vehicle.

Deflecting the brake pedal 30 into the second deflection zone 64 opens the service brake valve 42 so that it is in at least fluid communication with the brake fluid stored in the first accumulator 52. The brake fluid can pass through the service brake valve 40 and flow into one or more of the service brakes 62 to apply them in a controlled and predictable manner.

Before or after the first accumulator 52 is emptied, the brake fluid pressure in line 58, which is connected to parking brake 68, decreases below the pressure of the brake fluid stored within the second accumulator 66. The pressurized brake fluid within the second accumulator 66, as well as in the parking brake 68, flows from the second accumulator 66 according to well-known fluid pressure equalization theories. The brake fluid is communicated from the parking brake 68 and the accumulator 66, through the parking brake valve 60, through the restrictor 70 and into the sump 74.

The restrictor 70 restricts the flow of brake fluid from the parking brake 68 so that the one or more friction means within the parking brake 68, previously held off the wheel friction means by the pressurized brake fluid, are allowed to gradually frictionally engage one another, as describe above. The parking brake 68 is gradually engaged in a controlled and predicable manner. Preferably, the vehicle is decelerated at a safe rate to avoid tipping and/or loss of load.

In accordance with the provisions of the patent statutes, the present invention has been described in what is considered to represent its preferred embodiments. However, it should be noted that the invention can be practiced otherwise than as specifically illustrated and described without departing from its spirit or scope.

## Claims

1. A vehicle braking system, comprising:
at least one spring apply, hydraulic release parking brake;
at least one parking brake valve connected to said parking brake through at least one brake fluid line;
at least one parking brake accumulator in said brake fluid line between said parking brake and said parking valve; and
at least one restrictor connected to said parking brake valve for restricting the flow of brake fluid from said parking brake.

2. The system of claim 1, wherein said at least one brake fluid line is connected to a service brake system.

3. The system of claim 2, wherein said service brake system comprises at least one controller, at least one service brake valve, at least one service brake, and at least one brake pedal.

4. The system of claim 3, wherein said brake pedal has a first deflection zone in which said service brake valve is electronically engaged by said brake pedal and a second deflection zone in which said service brake valve is manually engaged by said brake pedal.

5. The system of claim 1, wherein said restrictor is connected to said parking brake through said parking brake valve.

6. The system of claim 1, wherein at least one sub-supply line connects said restrictor to said parking brake valve.

7. The system of claim 6, wherein said sub-supply line has a first cross-sectional area.

8. The system of claim 7, wherein said restrictor has a second cross-sectional area wherein said second cross-sectional area is smaller than said first cross-sectional area.

9. The system of claim 1, wherein said restrictor is connected to at least one sump.

10. A method of engaging the parking braking a vehicle, comprising:
providing at least one spring apply, hydraulic release parking brake with a pressurized brake fluid;
providing a parking brake accumulator in fluid communication with said parking brake;
providing at least one parking brake valve in fluid communication with said parking brake accumulator; and
communicating said pressurized brake fluid from said parking brake and said parking brake accumulator through said at least one parking brake valve and through at least one restrictor, said restrictor decreasing the flow of said brake fluid from said parking brake so that said parking brake is gradually applied.

11. The method of claim 10, further comprising selectively engaging a service brake system having a brake pedal, at least one service brake valve, a controller and at least one service brake.

12. The method of claim 11, wherein said brake pedal has a first deflection zone and a second deflection zone.

13. The method of claim 12, wherein deflection of said brake pedal into said first deflection zone is sensed by at least one sensor, said sensor sending at least one signal to said controller.

14. The method of claim 13, wherein said controller sends a signal proportional to the deflection of said brake pedal in said first deflection zone to at least one service brake valve and wherein said service brake valve communicates said brake fluid to said at least one service brake.

15. The method of claim 13, wherein deflection of said brake pedal into said second zone mechanically engages said service brake valve to deliver said pressurized brake fluid to said at least one service brake.

16. The method of claim 11, wherein a decrease in said pressurized brake fluid in said service brake system causes said brake fluid to flow from said at least one parking brake through said restrictor.

17. The method of claim 16, wherein said restrictor reduces the flow of said pressurized brake fluid from said parking brake so that said parking brake is gradually applied.

18. A method of engaging a vehicle parking system, comprising:
providing a spring apply, hydraulic release parking brake having a predetermined amount of pressurized brake fluid; and
gradually applying said parking brake by gradually decreasing the pressure of said pressurized brake fluid in said parking brake by restricting the flow of said pressurized brake fluid from said parking brake with at least one restrictor.

19. The method of claim 18, wherein said brake fluid communicates from said parking brake through at least one brake line having a first cross-sectional area.

20. The method of claim 19, wherein communication of said brake fluid from said parking brake through said brake line is restricted by said restrictor having a second cross-sectional area, said second cross-sectional area is smaller than said first cross-sectional area.
